# EUROPÄISCHE PATENTANMELDUNG

(11) **EP 1 710 347 A1**
(43) Veröffentlichungstag der Anmeldung: **11.10.2006**
(21) Anmeldenummer: 06003572.2
(22) Anmeldetag: 22.02.2006
(51) Int. Cl.: D21D 5/02, D21B 1/32

(54) **Verfahren zum Auflösen und Reinigen von störstoffhaltigen Papierrohstoffen**

(30) Priorität: 08.04.2005 DE 102005016192
(71) Anmelder: Voith Patent GmbH, 89522 Heidenheim (DE)
(72) Erfinder: Lang, Heinrich, 88273 Fronhofen-Fronreute (DE); Rienecker, Reimund, 89522 Heidenheim (DE); Respondek, Peter, 88213 Ravensburg (DE); Schweiss, Peter, 89275 Thalfingen (DE); Stieb, Helmut, 88281 Schlier (DE)

(57) **Zusammenfassung**

Das Verfahren dient zum Reinigen von störstoffhaltigen, insbesondere mit Schwerteilen verunreinigten Papier- oder Zellstoffsuspensionen. Dabei wird die Suspension (S) in einen geschlossenen Siebapparat (2) geführt, dessen Sieb (3) eine zylindrische oder konische Form hat und mit Sortierschlitzen (23) versehen ist, die vorzugsweise relativ weit sind. Das Verfahren wird angewendet auf Papier- oder Zellstoffsuspensionen, die aus einem offenen Stofflöser (1) oder Sekundärstofflöser ohne weitere Reinigung oder Entstippung in den Siebapparat (2) eingeführt werden. Das Verfahren ermöglicht zuverlässige Entfernung der groben Störstoffe bei gleichzeitig hohem Durchsatz durch den Siebapparat (2).

## Beschreibung

Die Erfindung betrifft ein Verfahren gemäß dem Oberbegriff des Anspruchs 1.

Bekanntlich ist es zumeist unvermeidbar, dass die zur Papierherstellung verwendeten Papierrohstoffe einen mehr oder weniger großen Anteil an Störstoffen enthalten. Derartige Störstoffe sind z.B. Steine, Drähte oder sonstige Metallstücke. Selbstverständlich sollen die Störstoffe möglichst schnell entfernt werden. Zum einen, um die zur Bearbeitung benutzten Maschinen vor Verschleiß zu schützen und zum anderen wegen der Qualitätsanforderungen an das spätere Papier.

Bei vielen bekannten Verfahren wird der in gebundenen Ballen angelieferte Papierrohstoff entdrahtet und dann in einem Stofflöser, z.B. bei einem Trockengehalt zwischen 4 und 8 % aufgelöst. Nach Vermischung mit Wasser wird der Papierrohstoff dabei durch mechanische Bearbeitung zerteilt. Beim Auflösen entsteht eine Suspension, die in der Regel pumpfähig ist und Störstoffe enthält. Das ist bei Altpapier regelmäßig der Fall. Aber auch im Frischzellstoff können störende Verunreinigungen wie Stücke der Ballenbindedrähte oder bei Transport oder Lagerung hineingelangte Fremdteile vorliegen. Auch noch nicht ausreichend aufgelöste Bahnstücke (wet laps) können störend wirken.

Der Erfindung liegt die Aufgabe zu Grunde, ein Verfahren der angegebenen Art zu schaffen, mit dem es möglich ist, die Papierrohstoffe wirtschaftlich und betriebssicher von Störstoffen zu reinigen, insbesondere von solchen Störstoffen, die auf Grund ihrer Art und Größe an nachfolgenden Maschinen zu Schäden führen können.

Diese Aufgabe wird durch die im Kennzeichen des Anspruchs 1 genannten Merkmale im Zusammenwirken mit denen des Oberbegriffes gelöst.

Ein bedeutender Vorteil des erfindungsgemäßen Verfahrens liegt darin, dass das Sieb mit Schlitzen ausgestattet ist, wodurch ein relativ großer Gutstoffstrom aus dem Siebapparat abgezogen werden kann und gleichzeitig die Störstoffe, die eine gewisse Größe überschreiten, zuverlässig aus der Suspension entfernt werden. In vorteilhaften Ausführungsformen haben die Schlitze des Siebes eine Weite zwischen 0,8 und 2 mm, was günstig in der Herstellung des Siebes ist und z.B. im Vergleich zu in der Feinsortierung verwendeten Schlitzsieben einen relativ großen Durchsatz gestattet. Auch im Vergleich zu Lochsieben mit derselben Sortiercharakteristik haben Schlitzsiebe einen höheren Volumendurchsatz. Das ist bei typischen Anwendungen der Erfindung, also der Reinigung von Suspensionen mit Störstoffen, deren Größe im Bereich von mehreren Millimetern liegt, von besonderem Vorteil. Zur Entfernung von Drahtstücken kann die Schlitzweite auf einen Wert knapp unterhalb des Durchmessers der vorkommenden Drähte festgelegt werden.

Ein weiterer Vorteil der Erfindung liegt darin, dass im Gegensatz zu oft üblichen Hydrozyklon-Apparaten die Abscheidung von steifen Störstoffen, die eine bestimmte Größe überschreiten, vollständig erfolgt ist. Gerade diese genannten Störstoffe, z.B. Metallteile oder Steine, bilden nämlich eine Gefahr für die Betriebssicherheit nachfolgender Maschinen, wie etwa Entstipper oder Refiner. Dagegen können kleinere Störstoffe, die das Sieb des Siebapparates passieren konnten und in den Gutstoffstrom gelangt sind, in den zumeist ohnehin vorhandenen späteren Trennstufen abgeschieden werden.

Bei einer speziellen Anwendung der Erfindung, nämlich der Aufbereitung von größtenteils störstofffreiem Frischzellstoff, ist das Verfahren in der Lage, mit relativ geringem Aufwand die nur sporadisch mitgeführten Störstoffe zu entfernen.

Das Verfahren kann so betrieben werden, dass der Rejektstrom, der aus dem Siebapparat abgeführt wird, mengenmäßig regelbar ist, ohne dass verstopfungsempfindliche Absperrorgane, Stellventile oder Ähnliches im eigentlichen Rejektstrom eingesetzt werden müsste. Hierauf wird bei Beschreibung der Figuren noch näher eingegangen werden.

Die für das Verfahren besonders geeigneten Siebe können als zylindrische Stabsiebkörbe ausgestaltet sein, wobei es möglich ist, diese - im Gegensatz zu Feinschlitzsieben - mit relativ robusten Stäben auszustatten, da hier die Anforderungen an die Sortierqualität geringer sind. Die Stabbreite kann bei 5 mm oder mehr liegen.

Die Erfindung wird erläutert an Hand von Zeichnungen. Dabei zeigen:
- Figur 1:: Schema mit einer vorteilhaften Ausführung des erfindungsgemäßen Verfahrens;
- Figur 2:: eine Variante des Verfahrens;
- Figur 3:: Blick auf einen für das Verfahren besonders geeigneten Schlitzsiebkorb.

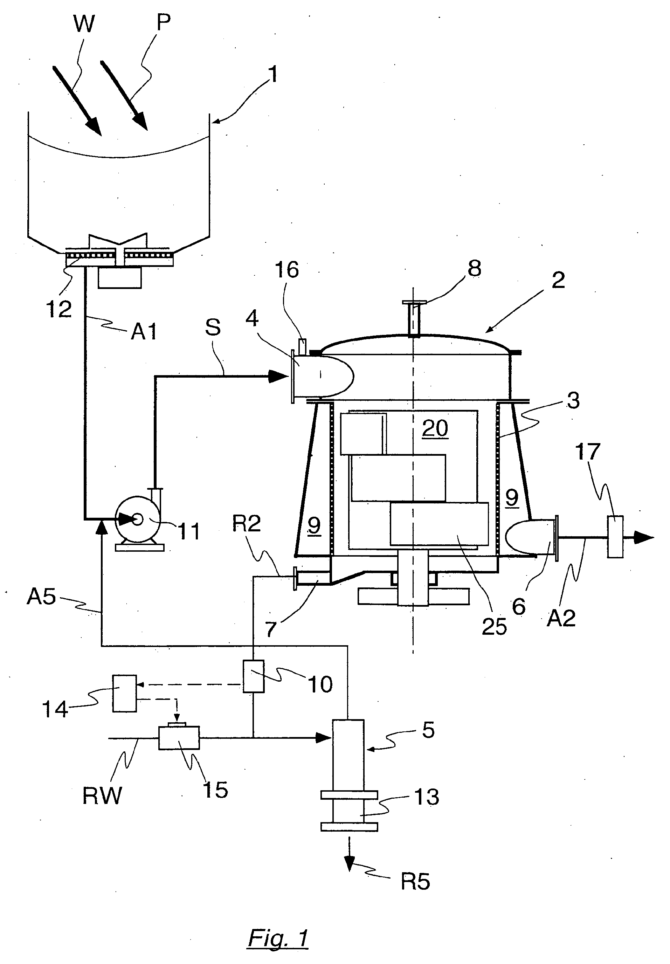

Wie Fig. 1 zeigt, kann das erfindungsgemäße Verfahren folgendermaßen durchgeführt werden: In einem offenen Stofflöser 1 wird Papierstoff P zusammen mit Wasser W eingetragen und zu einer pumpfähigen Suspension aufgelöst. Im Boden des Stofflösers 1 befindet sich ein Grobsieb 12, durch das ein Pulper-Gutstoff A1 hindurch abgezogen und mit einer Stoffpumpe 11 in den Zulauf 4 eines geschlossenen Siebapparates 2 eingepumpt wird. Die Strömungsführung innerhalb des Siebapparates 2 ist derart, dass ein großer Teil der zufließenden Suspension S in radialer Richtung von innen nach außen das Sieb 3 passieren kann, während die am Sieb 3 zurückgehaltenen Störstoffe sich aufkonzentrieren und durch den Rejektauslass 7 als Rejektstrom R2 den Siebapparat 2 wieder verlassen. Das Sieb 3 wird durch einen daran vorbeibewegten Rotor 20 frei gehalten, der mit stufenförmigen Räumelementen 25, z.B. gemäß dem deutschen Patent P 37 01 669, versehen ist. Der Durchlaufstrom, also der Teil der Suspension, der das Sieb 3 passieren konnte, wird in einem Gutstoffraum 9 gesammelt und durch einen Gutstoffauslass 6 als Gutstoff A2 abgeführt. Luft und eventuell vorhandene Schaumstoffe können durch einen an der höchsten Stelle angebrachten Entlüftungsanschluss 8 abgeleitet werden.

Der Rejektstrom R2 wird hier einer Trennvorrichtung 5 zugeführt, die als zylindrischer Apparat mit senkrecht stehender Mittellinie ausgeführt ist. In dieser Trennvorrichtung 5 werden auf Grund von Zentrifugalkräften die Schwerteile zum Rand hin ausgeschleudert und über die Schwerteilschleuse 13 als Rejekt R5 aus dem System entfernt. Der zentral abgezogene Gutstoff A5 der Trennvorrichtung kann in die Einlaufleitung zur Stoffpumpe 11 eingespeist werden und so wiederum in den Siebapparat 2 gelangen. Der Vorteil dieser Schaltung liegt darin, dass die Faserstoffverluste minimal sind. Dennoch besteht nicht die Gefahr, dass in der Trennvorrichtung 5 eventuell nicht abgeschiedene Störstoffe in den Gutstoff A2 des Siebapparates geraten können, da sie erneut am Sieb 3 abgewiesen würden. Nicht genügend aufgelöste Bahnstücke können länger im System bleiben und eventuell weiter zerkleinert werden. Bei sehr geringem Störstoffanfall kann es ausreichen, in bestimmten Abständen den Siebapparat 2 durchzuspülen und dabei die darin angesammelten Störstoffe zu entfernen.

Im Siebapparat 2 lässt sich der Druck dadurch konstant, bzw. auf einer gewünschten Höhe halten, dass der Einlaufdruck durch Druckmessgeber 16 ermittelt wird und daraus ein Stellsignal, z.B. für ein regelbares Ventil 17 im Gutstoffstrom A2 des Siebapparates 2 oder für einen drehzahlregelbaren Antrieb der Stoffpumpe 11 gebildet wird.

Der Rejektstrom R2 des Siebapparates 2, der für den Trennapparat 5 bestimmt ist, kann mengenmäßig erfasst werden, wozu hier ein Durchflussmesser 10 vorhanden ist. Dessen Messsignal lässt sich mit Hilfe eines Reglers 14 zur Steuerung einer zugegebenen Verdünnungsflüssigkeit z.B. Rückwasser RW nutzen. Auf diese Weise kann einerseits die Konsistenz des Rejektstromes reduziert werden, z.B. auf 2 % oder kleiner, was den Effekt der nachfolgenden Trennvorrichtung 5 erhöht, und außerdem eine Mengenstromregelung des Prozesses erfolgen, ohne dass im Rejektstrom selbst Stellorgane zur Mengenregulierung nötig sind. Bekanntlich führen nämlich solche Stellorgane oftmals zu Störungen, da sie sich zusetzen oder verstopfen. Stattdessen wird ein Stellventil 15 in der Zuführleitung für das Rückwasser RW verwendet.

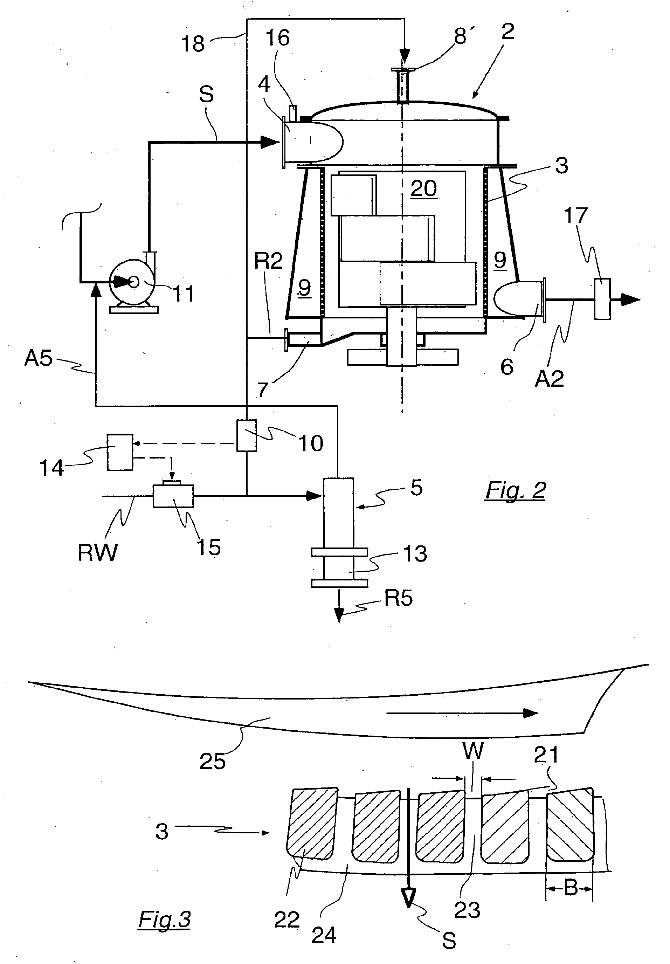

Für Betriebssituationen, die es nicht erlauben, ausreichend große Rejektströme aus dem Siebapparat 2 zur Weiterbehandlung abzuziehen, ist - wie in Fig. 2 dargestellt - eine externe Rezirkulationsleitung 18 vorgesehen, die den Rejektauslass 7 mit dem Anschluss 8' des Siebapparates 2 verbindet. Durch diese kann ein Teil des Rejektstromes R2 rezirkuliert werden. Da der Anschluss 8' hydraulisch mit dem Zulauf 4 des Siebapparates 2 in Verbindung steht, vermischt sich der Rejektrücklauf mit der einfließenden Suspension S. Um eine Pumpe in der Rejektleitung 18 einzusparen, kann der Siebapparat 2 mit Vorteil so ausgeführt sein, dass der Druck am Rejektauslass 7 höher ist als am Anschluss 8'. Das ist möglich, wenn der Anschluss 8' zentral und wenn der Rejektauslass 7 an der Peripherie des Siebapparates angeschlossen ist.

Die Verhältnisse, die sich am Sieb 3 einstellen, sind in Fig. 3 etwas detaillierter dargestellt. Bei diesem Beispiel ist das Sieb 3 ein Stabsieb, bei dem eine größere Anzahl von Stäben 22 auf Tragringen 24 so angeordnet sind, dass zwischen ihnen Sortierschlitze 23 frei bleiben, durch die ein großer Teil der Suspension S als Gutstoff das Sieb 3 passieren kann. Die Weite W der Sortierschlitze 23 liegt mit Vorteil zwischen 0,8 und 2 mm und ist damit signifikant größer als bei üblichen Schlitzsiebkörben. Auch die Breite B der Stäbe 22 ist relativ groß, z.B. 5 mm, wodurch das Sieb sehr robust ist. Die Stäbe 22 sind hier so ausgeführt und angeordnet, dass in Laufrichtung des Rotors 20 bei benachbarten Stäben ein Überstand 21 entsteht. Das kann insbesondere das Einklemmen von Drahtstücken in den Sortierschlitz 23 verhindern. Das Sieb 3 wird durch den Rotor 20, von dem hier ein stufenförmiges Räumelement 25 dargestellt ist, frei gehalten. Solche Räumelemente 25 sind besonders bei der Reinigung von Frischzellstoffsuspension von Vorteil. In anderen Fällen können auch foilartige Räumflügel angebracht sein.

## Patentansprüche

1. Verfahren zum Reinigen von störstoffhaltigen Papier- oder Zellstoffsuspensionen, insbesondere von einer Suspension (S), die mit Schwerteilen verunreinigt ist, wobei diese Suspension (S) in einen geschlossenen Siebapparat (2) geführt wird,
mit mindestens einem Sieb (3), durch das ein Durchlaufstrom hindurch geleitet und als Gutstoffstrom (A2) abgeführt wird,
während sich im Siebapparat (2) am Sieb (3) zurückgehaltene Störstoffe aufkonzentrieren, die als Rejektstrom (R2) aus dem Siebapparat (2) kontinuierlich oder in einstellbaren Zeitabständen abgeleitet werden und wobei die störstoffhaltige Papier- oder Zellstoffsuspension aus einem offenen Stofflöser (1) oder Sekundärstofflöser ohne weitere Reinigung oder Entstippung in den Siebapparat (2) geführt wird.
**dadurch gekennzeichnet,**
**dass** das Sieb (3) eine zylindrische oder konische Form hat und mit Sortierschlitzen (23) versehen ist.

2. Verfahren nach Anspruch 1,
**dadurch gekennzeichnet,**
**dass** der Durchlaufstrom radial von innen nach außen durch die Sortierschlitze geführt wird.

3. Verfahren nach Anspruch 1 oder 2,
**dadurch gekennzeichnet,**
**dass** im Siebapparat (2) mindestens ein Sieb (3) mit Sortierschlitzen (23) verwendet wird, die eine Weite (W) haben, die zwischen 0,5 und 3 mm, vorzugsweise zwischen 0,8 und 2 mm, liegt.

4. Verfahren nach Anspruch 1, 2 oder 3,
**dadurch gekennzeichnet,**
**dass** der Rejektstrom (R2) zumindest teilweise einer Trennvorrichtung (5) zugeführt wird.

5. Verfahren nach Anspruch 4,
**dadurch gekennzeichnet,**
**dass** in der Trennvorrichtung (5) Zentrifugalkräfte erzeugt werden, durch die die Schwerteile ausgeschleudert werden.

6. Verfahren nach Anspruch 4,
**dadurch gekennzeichnet,**
**dass** als Trennvorrichtung (5) ein zylindrischer oder konischer Apparat mit senkrecht stehender Mittellinie verwendet wird.

7. Verfahren nach Anspruch 4, 5 oder 6,
**dadurch gekennzeichnet,**
**dass** Schwerteile aus der Trennvorrichtung (5) über eine Schwerteilschleuse (13) ausgeschieden werden.

8. Verfahren nach einem der voran stehenden Ansprüche,
**dadurch gekennzeichnet,**
**dass** die am Sieb (3) zurückgehaltenen Störstoffe in einem Rejektstrom (R2) kontinuierlich aus dem Siebapparat (2) herausgeführt werden.

9. Verfahren nach Anspruch 8,
**dadurch gekennzeichnet,**
**dass** der Rejektstrom (R2) so eingestellt wird, dass sein volumetrischer Anteil am Strom durch die in den Siebapparat (2) eingeführte Suspension (S) mindestens 20 % beträgt.

10. Verfahren nach einem der Ansprüche 4 bis 9,
**dadurch gekennzeichnet,**
**dass** der von Schwerteilen gereinigte Gutstoffstrom der Trennvorrichtung (5) erneut in den Siebapparat (2) eingeleitet wird.

11. Verfahren nach Anspruch 10,
**dadurch gekennzeichnet,**
**dass** die Einleitung vor der den Siebapparat (2) speisenden Stoffpumpe (11) erfolgt.

12. Verfahren nach einem der Ansprüche 4 bis 11,
**dadurch gekennzeichnet,**
**dass** dem Rejektstrom des Siebapparates (2) vor dem Einlauf in die Trennvorrichtung (5) oder in dieser eine Verdünnungsflüssigkeit, insbesondere gereinigtes Rückwasser (RW), zugeführt wird.

13. Verfahren nach Anspruch 12,
**dadurch gekennzeichnet,**
**dass** der Rejektstrom des Siebapparates (2) auf eine Konsistenz von höchstens 2 % verdünnt wird.

14. Verfahren nach Anspruch 12 oder 13,
**dadurch gekennzeichnet,**
**dass** die Menge des Rejektstromes (R2) vor der Zugabe der Verdünnungsflüssigkeit gemessen wird und dass die Menge der Verdünnungsflüssigkeit so eingestellt. wird, dass die Größe des Rejektstromes (R2) einem vorgegebenen Wert entspricht.

15. Verfahren nach einem der Ansprüche 8 bis 14,
**dadurch gekennzeichnet,**
**dass** zwischen dem Auslauf des Rejektstromes aus dem Siebapparat (2) und dem Zulauf in die Trennvorrichtung (5) keine Stoff berührten Mengenregelorgane, insbesondere keine Stellventile, verwendet werden.

16. Verfahren nach einem der voran stehenden Ansprüche,
**dadurch gekennzeichnet,**
**dass** der Gutstoffstrom (A2) des Siebapparates (2) mengengeregelt wird.

17. Verfahren nach einem der voran stehenden Ansprüche,
**dadurch gekennzeichnet,**
**dass** der Druck im Siebapparat (2) geregelt wird.

18. Verfahren nach einem der voran stehenden Ansprüche,
**dadurch gekennzeichnet,**
**dass** die Papier- oder Zellstoffsuspension (S) mit Teilen von Ballenbindedrähten verunreinigt ist und dass diese entfernt werden.

19. Verfahren nach einem der voran stehenden Ansprüche,
**dadurch gekennzeichnet,**
**dass** eine Frischzellstoffsuspension gereinigt wird.

20. Verfahren nach einem der Ansprüche 1 bis 18,
**dadurch gekennzeichnet,**
**dass** eine Altpapiersuspension gereinigt wird.

21. Verfahren nach einem der voran stehenden Ansprüche,
**dadurch gekennzeichnet,**
**dass** der Stofflöser (1) ein Grobsieb (12) mit einer Lochung von 10 - 30 mm Durchmesser enthält und dass die störstoffhaltige Papier- oder Zellstoffsuspension durch dieses Grobsieb (12) abgezogen wird.

22. Verfahren nach einem der voran stehenden Ansprüche,
**dadurch gekennzeichnet,**
**dass** ein Teil des Rejektstromes (R2) in den Siebapparat (2) zurückgeführt wird.

23. Verfahren nach Anspruch 22,
**dadurch gekennzeichnet,**
**dass** die Rückführung eines Teils des Rejektstromes (R2) mittels einer externen Rezirkulationsleitung (18) erfolgt, die in einen Anschluss (8') des Siebapparates (2) mündet, der hydraulisch mit dessen Zulauf (4) in Verbindung steht.

24. Verfahren nach einem der voran stehenden Ansprüche,
**dadurch gekennzeichnet,**
**dass** ein Sieb (3) mit Stäben (22) verwendet wird, zwischen denen die Sortierschlitze (23) frei bleiben.

25. Verfahren nach Anspruch 24,
**dadurch gekennzeichnet,**
**dass** die Stäbe (22) mit Tragringen (24) verschweißt sind.

26. Verfahren nach Anspruch 24 oder 25,
**dadurch gekennzeichnet,**
**dass** die Stäbe (22) so ausgeführt und angeordnet sind, dass bei benachbarten Stäben am in Strömungsrichtung der Suspension (S) stromaufwärtigen Stab jeweils ein Überstand (21) erzeugt wird.
